# EUROPEAN PATENT APPLICATION

(11) **EP 4 650 946 A1**
(43) Date of publication of application: **19.11.2025**
(21) Application number: 24175512.3
(22) Date of filing: 13.05.2024
(51) Int. Cl.: G06F 8/61, G06F 8/654, G06F 9/4401

(54) **FIRMWARE DOWNLOAD AND UPDATE OF SIM**

(71) Applicant: Giesecke+Devrient Mobile Security Germany GmbH, 81677 München (DE)
(72) Inventor: Monter Prat, Jordi, 81677 München (DE)

(57) **Abstract**

A SIM and method characterized by an Open Firmware Loader (OFL; ITL) having integrated thereto an Ultralight-Bootstrap, ULB, configuration, or secure channel credentials, enabling the Open Firmware Loader (OFL; ITL) to receive firmware images (310, 410), downloaded (2) from the firmware source (340, 440) to the SIM (100), under the Ultralight-Bootstrap, ULB, protocol, in messages of a challenge-response procedure upon an attachment procedure of attaching the SIM (100) to a mobile communication network, or using the secure channel credentials.

## Description

### Field of the invention

The invention relates to firmware download and update for a Subscriber Identity Module, SIM, hosted in a device.

### Background of the invention and prior art

When connecting devices over mobile networks to other entities, for example to other devices or to servers in the network background system, subscriber identity modules, SIMs, hosted in the devices are employed for authentication purposes.

SIMs are small-footprint computing entities, having limited computing and storage capacities. The SIM has an Integrated Circuit chip, IC chip, with an operating system, OS, and software implemented on the IC chip. The operating system, OS, of the SIM, possibly in combination with further code for the SIM, is also referred to as firmware of the SIM. The operating system, OS, also referred to as eOS/iOS in case of an eSIM/iSIM.

SIMs are known in different form factors including plug-in SIM, pSIM, also referred to as SIM card, designed to be removably plugged into a device, embedded SIM, eSIM, designed to be soldered into a device, and integrated SIM, iSIM, designed as integrated into the chipset of the device. For SIM, also the terminology Secure Element is used, and correspondingly pSE, eSE, iSE for pSIM, eSIM, iSIM. For SIM, also the terminology UICC is used, and correspondingly pUICC or only UICC (as the traditional form factor), eUICC, iU-ICC for pSIM, eSIM, iSIM.

As opposite of traditional pluggable SIMs, pSIMs, that can be inserted and removed, an eSIM is soldered into the device, making it very difficult (or costly) to replace it during the commercial life cycle of the device. Over more, an iSIM is integrated into the device chipset, and it is almost impossible to remove and replace it.

For this reason, there is a need for the so-called OS update, or firmware upgrade or update, that allows to modify the operating system, OS, and possibly further firmware portions, especially in case of an issue or a bug is found. In that manner, it will be possible to upgrade or update the OS/eOS/iOS Over The Air, removing the necessity of physically eSE/eSIM/eUICC/iUICC replacement.

For general firmware downloading tasks, to download an operating system to a computing entity, the open firmware loader, OFL is known, which is a minimum operating system having only restricted functionality, and enabling the download of a fully functional operating system to the computing entity, in a secured manner, secured with cryptographic keys.

Document [1] [GP OFL] GlobalPlatform Technology, Open Firmware Loader for Tamper Resistant Secure Hardware, Version 2.0, Public Release, January 2022, Document Reference: GPC_SPE_134 (formerly GPC_FST_134), describes an Open Firmware Loader for Tamper Resistant Secure Hardware, like SIMs.

According to [1], the Open Firmware Loader, OFL, provides a standardized mechanism for (down)loading firmware into Tamper Resistant Secure Hardware. Document [1] defines the cryptographic protection, for example based on Elliptic Curve Cryptography, ECC, the roles involved in firmware (down)loading, and the administrative rights for the different operations. The Tamper Resistant Secure Hardware may typically be a Secure Element, SE, and especially a Subscriber Identity Module, SIM. The firmware is typically provided in form of one or several memory images which typically contain the Operating System, but may also contain additional data like applets, file systems or even user data.

According to internal prior art of the applicant, an Image Trusted Loader, ITL, is known as a proprietary implementation of an open firmware loader, OFL, for tamper resistant hardware, for example in compliance with [1] [GP OFL], which is designed to load an operating system OS, or/and updates for such an operating systems, OS, and possibly further firmware components and updates of firmware components, to a subscriber identity module, SIM. The firmware, especially the operating system OS, is preferably provided for loading in the form of one or several memory images, thus the naming Image Trusted Loader.

An Open Firmware Loader, OFL, for a SIM, particularly an Image Trusted Loader ITL,can be depicted as a small OS in charge of protecting and installing a new OS in a specific SIM chipset. The SIM chipset is personalized in a SIM manufacturer high-security factory with security credentials, for instance cryptographic keys. The security credentials are used later to decrypt OS images and OS Update images created by the SIM manufacturer (also called Embedded UICC Manufacturer EUM) and loaded to the SIM, ensuring End-2-End protection - from the SIM manufacturer factory to the SIM chipset - of the OS image or OS Update image.

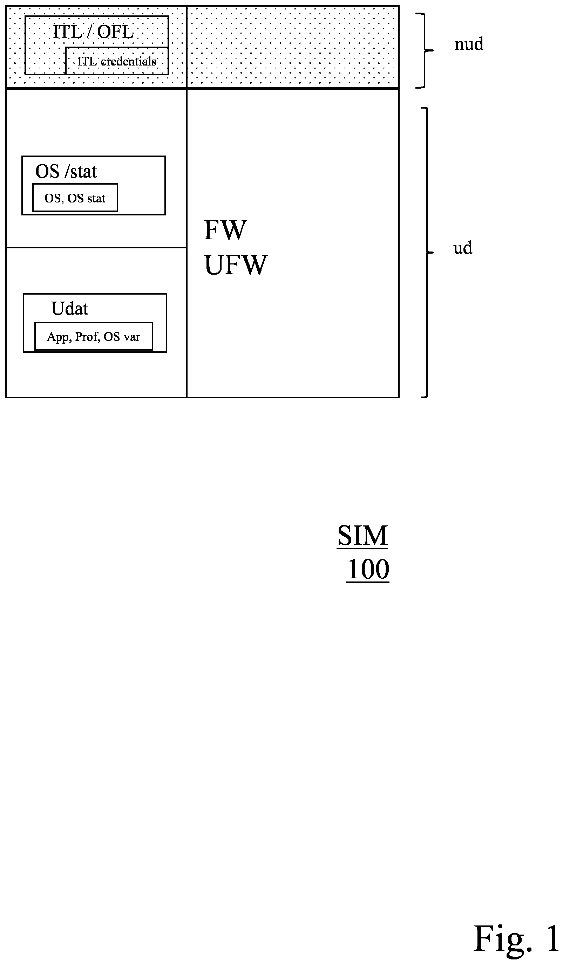

Fig. 1 depicts a SIM comprising an Image Trust Loader ITL, as executable code, which is not updatable, nud, and related ITL data, which are also not updatable, nud. The ITL data may comprise its own cryptographic materials used to protect and secure Firmware update operations. The SIM may comprises an updatable memory area, ud. In a memory section of the updatable memory, an operating system, OS, and static data of the operating system, OS stat, are or can be implemented or stored. In another memory section of the updatable memory, applications, App, subscription profiles, Prof, and operating system related variable data, OS var, are implemented or stored. In the updatable memory area, ud, firmware including operating system, OS, code and static data can be downloaded and updated, as well as OS variable data, subscription profiles and applications.

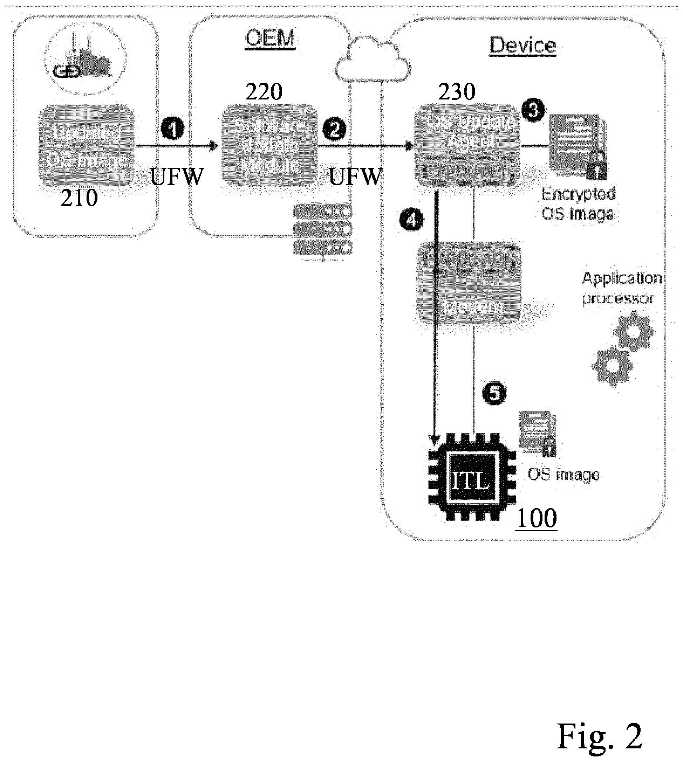

An example of a currently used process for firmware update by downloading an updated OS image from a SIM manufacturer facility over an OEM server and over a device to a SIM is depicted in Fig. 2. The firmware update according to Fig. 2 comprises following steps. 1) A SIM manufacturer delivers a firmware update UFW comprising an Updated OS image 210, wherein a software image of an updated operating system OS is comprised, to an Software update module 220 implemented in a server hosted by an OEM. 2) The OEM hosted Software update module 220 receives the Updated OS image and downloads it to the device, more precisely to an OS Update Agent 230 installed in the device. The OS Update Agent is a software, for example an application, in the device. The OS Update Agent is in charge of the OS/firmware update process of updating the OS or firmware in the SIM. The download can be via Over-The-Air, OTA, or via over-The-Wire, OTW. The OS Update Agent 230 is running for example on an Application Processor of the device. 3) The OS Update Agent 230 device-internally temporarily stores the Updated OS image 210 to a non-volatile memory, NVM, of the device in encrypted form, for subsequent download to the SIM. 4) The OS Update Agent 230 device-internally sends the Updated OS image 210 to the SIM with following steps. 4a) The OS Update Agent 230 sends to the SIM one or several Application Data Units, APDUs, to update the operating system, OS, currently installed in the SIM, which may imply deleting the operating system, OS, currently installed in the SIM, and to install an updated operating system OS, or to make updates on the currently installed operating system, OS, or some other OS update procedure. 4b) The OS Update Agent 230 sends to the SIM one or several Application Data Units, APDUs, or a sequence of APDUs, to load and install to the SIM the updates or the updated operating system, OS, contained in the Updated OS image 210. 4c) The OS Update Agent 230 checks if the updates or updated operating system, OS, is successfully loaded and installed. 4d) If required, the loading and/or installing is retried until success. In the SIM, the steps for updating the operating system OS, and if applicable deleting the currently present (or old) operating system OS, and receiving and installing the updates or updated operating system OS, step 4) including its sub-steps 4a,b,c,d), are executed by the Image Trusted Loader ITL hosted in the SIM. 5) The authorization and authenticity evidence attached to the Updated OS image is checked by the ITL/OFL, and the updated operating system is committed, i.e. installed and activated, upon success. The OS Update Agent 330 is incorporated in a chipset of the device, for example in an application processor of the device. The OS Update Agent 330 may communicate with the SIM 100 through a Modem which is also incorporated in the chipset of the device.

The current firmware update solution as depicted in Fig. 2 requires availability of the OEM server hosting the Software Update Module 220, via a first communication interface from the SIM manufacturer to the OEM server and a second communication interface from the OEM server to the device. Unavailability of the OEM server can lead to failing firmware updates. It would thus be desirable to have firmware update alternatives to the solution as depicted in Fig. 2.

The document [2] EP2533485B1 from the prior art describes a solution for downloading subscription profile data to a SIM (UICC) in messages of an attach and authentication procedure. The solution comprises sending to a mobile device subscription data in a challenge, which challenge is in a format which complies with the challenge-response authentication procedure implemented in the mobile communications system.

The provisioning of profile data or other data from a server to a SIM/UICC in messages of a challenge-response procedure is also referred to a Ultra-Light-Bootstrap, ULB, provisioning procedure. For the ULB provisioning of profile data, the SIM has a ULB subscription profile, and the profile server has corresponding data. The ULB subscription profile is a restricted-usage subscription profile which enables download of profile data to the SIM, however no permanent standard communication in any mobile communication network. The ULB subscription profile data may comprise ULB subscription data and/ or instruction data. The ULB subscription profile data may be integrated as a configuration into a piece of software. The piece of software has capacity to manage communication of the SIM/ UICC and a mobile station hosting the SIM/UICC in a mobile communication network, for connecting the SIM to an entity providing subscription profile management services.

Document [3] EP2294846B1 from the prior art describes a method for activating a SIM card, wherein when the SIM card is inserted into a mobile equipment, such as a mobile telephone. When the mobile equipment is switched on, an On-Demand-Activation database is connected to the SIM card for updating the SIM card with a card definition file.

### Objective of the invention

It is an object of the present invention to provide alternatives for firmware download and update to the currently available solutions. Particularly, it is an object of the invention to provide a firmware download solution with reduced complexity.

### Summary of the invention

The object of the invention is achieved by an embedded system with following features, according to claim 1. Embodiments of the invention are presented in dependent claims.

In greater detail, the object of the invention is achieved by a Subscriber Identity Module, SIM, comprising, implemented in the SIM, an Open Firmware Loader constructed to manage downloadable firmware images received in the SIM from a firmware source. The SIM is characterized by the Open Firmware Loader having integrated thereto an Ultralight-Bootstrap, ULB, configuration, enabling the Open Firmware Loader to receive firmware images, downloaded from the firmware source to the SIM, under the Ultralight-Bootstrap, ULB, protocol, in messages of a challenge-response procedure upon an attachment procedure of attaching the SIM to a mobile communication network.

The object of the invention is also achieved by a corresponding method for downloading a firmware image to a SIM, the SIM comprising, implemented in the SIM, an Open Firmware Loader constructed to manage downloaded firmware images received in the SIM from a firmware source. The method is characterized by the Open Firmware Loader having integrated thereto an Ultralight-Bootstrap, ULB, configuration, the Open Firmware Loader receiving the firmware image, downloaded from the firmware source to the SIM under the Ultralight-Bootstrap, ULB, protocol, in messages of a challenge-response procedure upon an attachment procedure of attaching the SIM to a mobile communication network.

The presented solution extends the functionality of the Image Trust Loader, i.e. of the SIM-hosted Open Firmware Loader, to reception of firmware images directly from the firmware source, avoiding dependency on third parties like OEMs in the step of downloading firmware images to the SIM.

Particularly the ULB procedure provides a secure communication procedure between a SIM and an external entity over the mobile communication network. According the invention, a usage range of the ULB procedure is extended to a new usage of downloading firmware images.

The object of the invention is also achieved by a SIM, comprising, implemented in the SIM, an Open Firmware Loader constructed to manage downloadable firmware images received in the SIM from a firmware source. The SIM is characterized by the Open Firmware Loader having integrated thereto secure channel credentials, enabling the Open Firmware Loader to receive firmware images, downloaded from the firmware source to the SIM, using the secure channel credentials.

The object of the invention is also achieved by a method for downloading a firmware image to a SIM, the SIM comprising, implemented in the SIM, an Open Firmware Loader constructed to manage downloaded firmware images received in the SIM from a firmware source. The method is characterized by the Open Firmware Loader having integrated thereto secure channel credentials, the Open Firmware Loader receiving the firmware image, downloaded from the firmware source to the SIM, using the secure channel credentials.

The presented solution extends the functionality of the Image Trust Loader, i.e. of the SIM-hosted Open Firmware Loader, to reception of firmware images directly from the firmware source, avoiding dependency on third parties like OEMs in the step of downloading firmware images to the SIM.

Particularly there are several secure channel procedure that provide a secure communication procedure between a SIM and an external entity over the mobile communication network. According the invention, a usage range of the secure channel procedure is extended to a new usage of downloading firmware images.

The secure channel procedure may comprise steps of key derivation or key agreement, encryption/decryption and authentication.

According to some embodiments, the firmware image comprises an operating system, OS, which may be either an entire operating system, or updates to an already installed operating system, and the method further comprises, after receiving the firmware image, one or several or all of the steps by the Open Firmware Loader:
- Optionally delete the already installed operating system, if any is present;
- install downloaded operating system in the SIM;
- Optionally activate the downloaded and installed operating system, if desired; which means, either activate the installed operating system; or only install the operating system and leave it in the installed status without immediate activation;
- Optionally reset the SIM;
- handover of control from the Open Firmware Loader to the downloaded and installed operating system, OS.

Depending on details of implementation, handover of control from the Open Firmware Loader to the new downloaded) installed operating system is accompanied or initiated by a reset of the SIM. Alternatively, the handover of control from the Open Firmware Loader to the new downloaded) installed operating system may be effected without resetting the SIM.

According to some embodiments, the SIM comprises an existing current (or old) operating system being installed in the SIM, and the firmware image comprises a new operating system, OS, or an updated version of said old operating system, OS. Herein, the method further comprises, after receiving the firmware image, installing the new operating system, OS, or installing the updated version of the current (old) operating system, OS, in the SIM. The method may further comprise deleting the current (old) operating system, OS, from the SIM, either before or after installing the new or updated operating system.

According to some embodiments, the method further comprises:
- initiate a verification if any firmware images destined for the SIM are available at the firmware source for download to the SIM, and
- if this is the case, perform the download of the firmware image.

According to some embodiments, to initiate the verification comprises to send a push notification from the firmware source to the SIM that a firmware image destined for the SIM is available at the firmware source for download to the SIM.

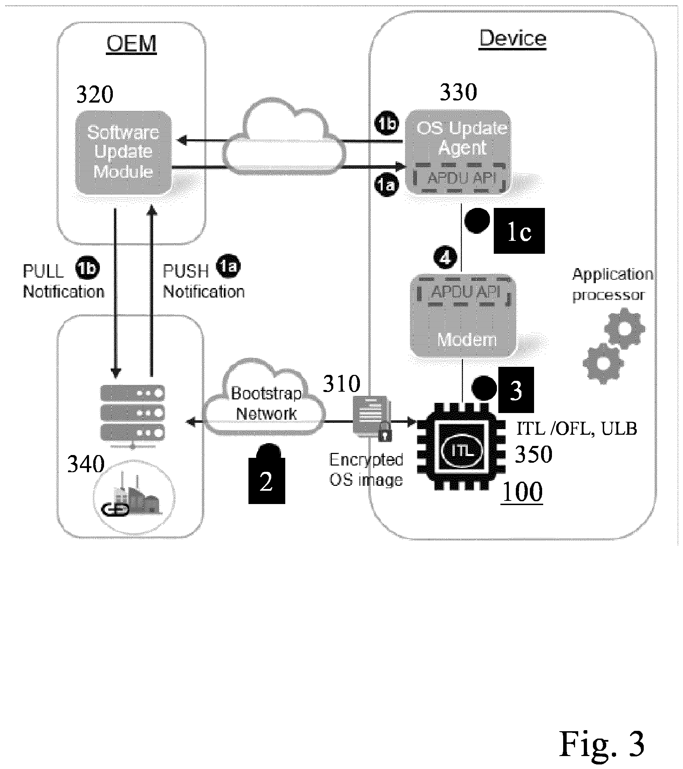

Embodiments of this type are depicted in Fig. 3, particularly referencing steps 1a+1c.

According to some embodiments, the push notification is sent from the firmware source to an OS Update Agent implemented in a device hosting the SIM, and sent further from the OS Update Agent to the SIM.

According to some embodiments, to initiate the verification comprises to retrieve, by the Open Firmware Loader of the SIM, or by an OS Update Agent implemented in a device hosting the SIM, or by a different source, a pull notification from the firmware source that a firmware image destined for the SIM is available at the firmware source for download to the SIM. Particularly, the OS Update Agent or a different source may trigger the SIM, and triggered by said trigger, the Open Firmware Loader of the SIM initiates verification if any firmware images destined for the SIM are available at the firmware source for download to the SIM.

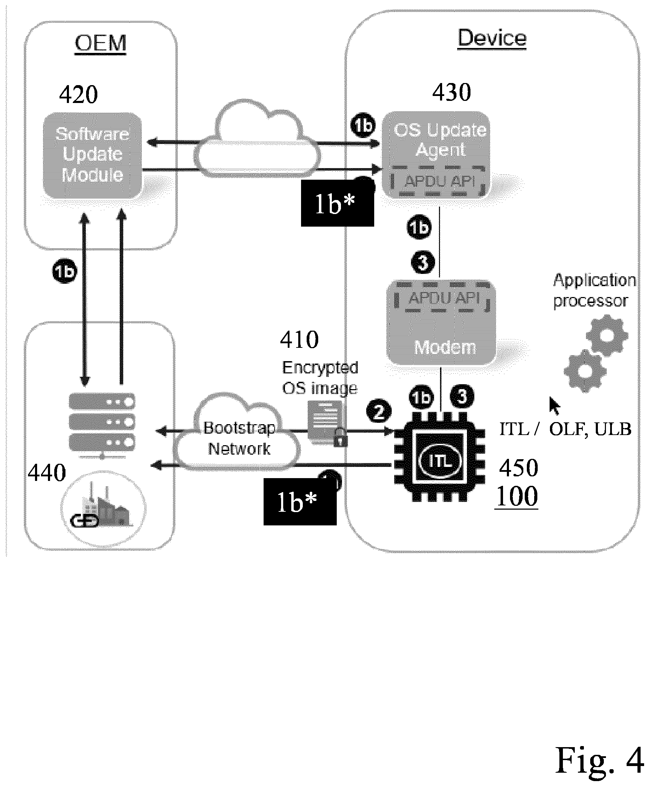

Embodiments of this type are depicted in Fig. 3 and 4, particularly referencing step sequence 1b in Fig. 3, or step sequence 1b or 1b* in fig. 4.

According to some embodiments, to initiate the verification comprises to retrieve, by the Open Firmware Loader of the SIM, firmware source (340, 440) (e.g. over the Ultralight-Bootstrap, ULB, protocol, or using the secure channel credentials), said pull notification from the firmware source that a firmware image destined for the SIM is available at the firmware source for download to the SIM.

Embodiments of this type are depicted in Fig. 4, step sequence 1b or 1b*.

The invention further provides, according to a further alternative, a Subscriber Identity Module, SIM, comprising, implemented in the SIM, an Open Firmware Loader constructed to manage downloadable or downloaded firmware images received in the SIM from a firmware source.

The SIM according to the further alternative is characterized by the Open Firmware Loader having integrated thereto secure channel credentials, enabling the Open Firmware Loader to receive firmware images, downloaded from the firmware source to the SIM, using the secure channel credentials.

Particularly the secure channel credentials provide the opportunity to establish a secure channel, and by this a secure communication procedure between a SIM and an external entity. According the invention, a usage range of downloading firmware images is extended to a new secure communication mechanism.

The invention further provides, according to said further alternative, method for downloading a firmware image to a Subscriber Identity Module, SIM, the SIM comprising, implemented in the SIM, an Open Firmware Loader constructed to manage downloaded firmware images received in the SIM from a firmware source.

The method according to the further alternative is characterized by the Open Firmware Loader having integrated thereto secure channel credentials, the Open Firmware Loader receiving the firmware image, downloaded from the firmware source to the SIM, using the secure channel credentials.

The method according to the further alternative may be in combination with any of the above described embodiments.

### Brief description of the drawings

Embodiments of the invention will now be described with reference to the accompanying drawings, throughout which like parts are referred to by like references, and in which represents:
- Fig. 1: a SIM comprising an Image Trust Loader ITL/Open Firmware Loader OFL, suitable for the present invention;
- Fig. 2: a firmware update solution, according to the prior art;
- Fig. 3: firmware update solutions, according to first embodiments of the invention;
- Fig. 4: firmware update solutions, according to second embodiments of the invention;
- Fig. 5: a SIM comprising an Open Firmware Loader OFL hosting an ULB configuration, according to embodiments of the invention;
- Fig. 6: a SIM comprising an Open Firmware Loader OFL hosting secure channel credentials, according to embodiments of the invention.

### Detailed description of the invention

Fig. 3 shows a firmware update architecture, and firmware update solutions realized in the firmware update architecture, according to first embodiments of the invention. According to the first embodiments of Fig 3, a verification for available destined firmware images for a SIM 100 is initiated by an entity outside the SIM 100.

The firmware update architecture comprises an OEM server comprising a software update module 320, a firmware provider server comprising a firmware source 340, and a device. The device hosts a chipset, which may comprise an Application Processor, and/or a Modem and/or further chipset components. The device hosts a SIM 100. The SIM comprises an operating system OS. The device further comprises an OS Update Agent 330 incorporated in the device chipset, and which may be hosted in the Application Processor comprised in the device chipset. The OS Update Agent 330 is constructed to communicate with the SIM in regard of managing firmware images 310 for managing the operating system OS of the SIM. Managing the operating system OS may include any one or several of updating an existing operating system, deleting an existing operating system OS, and loading a new or updated operating system OS, or updates for an operating system OS.

In the firmware update solutions according to Fig. 3, a verification is initiated (1a, 1b, 1c) if any firmware images destined for the SIM 100 are available at the firmware source 340 for download to the SIM 100.

According to a first sub-embodiment of the first embodiments, the firmware source 340 identifies (i.e. internally verifies) that firmware updates are available for download to the SIM, and sends, in a step a, a push notification to the software update module 320 that one or several firmware images destined for the SIM 100 are available at the firmware source 340 for download to the SIM 100. The OEM software update module 320 forwards the push notification, in continuation of step 1a, to the device OS update agent 320. The device OS update agent 320 forwards, in a step 1c, the push notification to the SIM 100, and initiates the SIM 100 to trigger step 2, download of available destined firmware images 310 to the SIM 100.

The available destined firmware image or images 310 are downloaded in a step 2 from the firmware source 340 directly to the SIM 100 hosted Image Trust Loader ITL/ Open Firmware Loader OFL 350.

According to a second sub-embodiment of the first embodiments, in a step 1b, the OS Update Agent 330 initiates verification if any firmware updates for the SIM 100 are available, and to this end retrieves a pull notification, over the software update module 320, from the firmware source 340, if any firmware images destined for the SIM 100 are available at the firmware source 340 for download to the SIM 100. If any firmware images destined for the SIM 100 are available at the firmware source 340 for download to the SIM 10, then the firmware source 340 initiates step 2, download of available destined firmware images 310 to the SIM 100.

The available destined firmware image or images 310 are downloaded in a step 2 from the firmware source 340 directly to the SIM 100 hosted Image Trust Loader ITL/OFL 350.

Fig. 4 shows a firmware update architecture, and firmware update solutions realized in the firmware update architecture, according to second embodiments of the invention. According to the second embodiments, a verification, if any firmware images destined for the SIM 100 are available, is initiated by the SIM 100.

The firmware update architecture comprises an OEM server comprising a software update module 420, a firmware provider server comprising a firmware source 440, and a device. The device hosts a chipset, which may comprise an Application Processor, and/or a Modem and/or further chipset components. The device hosts a SIM 100. The SIM comprises an operating system OS. The device further comprises an OS Update Agent 430 incorporated in the device chipset, and which may be hosted in the Application Processor comprised in the device chipset. The OS Update Agent 430 is constructed to communicate with the SIM in regard of managing the operating system OS of the SIM. Managing the operating system OS may include any one or several of updating an existing operating system, deleting an existing operating system OS, and loading a new or updated operating system OS, or updates for an operating system OS.

In the firmware update solutions according to Fig. 4, the SIM 100 initiates a verification (1b, 1b*) if any firmware images destined for the SIM 100 are available at the firmware source 440 for download to the SIM 100. The SIM 100 may initiate the verification all internally, resulting in a single pull notification 1b* from the SIM 100 to the firmware source 440, or alternatively after having received a trigger from the OS Update Agent 430 or the OEM Software Update Agent 420, resulting overall in a step series 1b* for the pull notification from the SIM 100 to the firmware source 440.

According to the second embodiments as depicted in Fig. 4, the Image Trust Loader ITL / Open Firmware Loader OFL 450 hosted in the SIM 100 sends a pull notification to the firmware source 440 hosted at the firmware provider, so as to retrieve information if any firmware images 410 destined for the SIM 100 are available for download to the SIM.

According to a first sub-embodiment of the second embodiments, the ITL / OFL 450 in the SIM 100 sends the pull notification to the firmware source 440 over a step series 1b, first from the SIM ITL/OFL 450 to the device OS Update Agent 430. The OS Update Agent 430 forwards the pull notification to the OEM Software Update Module 420. The OEM Software Update Module 420 forwards the pull notification to the firmware source 440.

According to a second sub-embodiment of the second embodiments, the ITL / OFL 450 in the SIM 100 sends the pull notification directly to the firmware source 440 over a step 1b*. Optionally, before ITL / OFL 450 in the SIM 100 sends the pull notification directly to the firmware source 440, the SIM 100 ITL/OFL 450 may receive a trigger notification 1b* from the OS Update Agent 430, triggering the SIM 100 ITL/OFL 450 to send the pull notification to the firmware source 440. The OS Update Agent 430 may send the trigger to the SIM 100 ITL/OFL 450 either on own initiative, or triggered by the OEM Software Update Module 420, by a trigger notification 1b* sent from the Software Update Agent 420 to the Software Update Agent 430.

The available destined firmware image or images 410 are downloaded in a step 2 from the firmware source 440 directly to the SIM 100 hosted Image Trust Loader ITL/ Open Firmware Loader OFL 450.

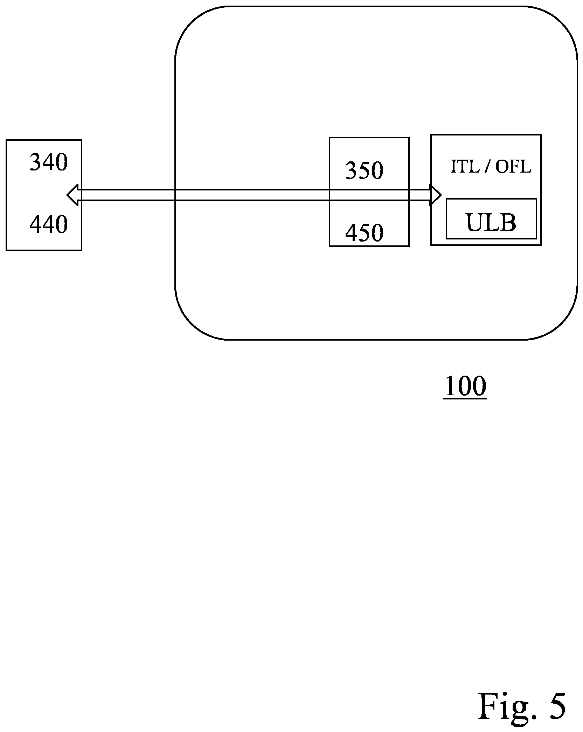

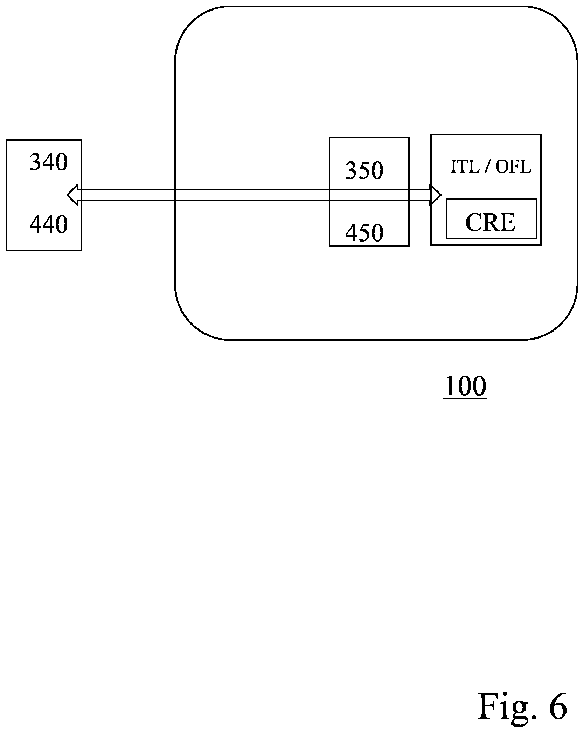

With reference to Fig. 5 and Fig. 6, embodiments of transmission of firmware images from a firmware source 340, 440 directly to a SIM 100 Image Trust Loader ITL / Open Firmware Loader OFL 350, 450 will be described.

Fig. 5 shows a SIM comprising an Open Firmware Loader ITL hosting an ULB configuration, according to embodiments of the invention.

According to the embodiments as depicted in Fig. 5, the Image Trust Loader ITL/ Open Firmware Loader OFL 350, 450 in the SIM 100 has integrated thereto an Ultra-Light-Bootstrap configuration to enable the download of the available destined firmware image or images 310, 410 from the firmware source 340, 440 at the firmware provider directly to the SIM 100 ITL/OFL 350, 450. The firmware images 310, 410 are transmitted in messages of a challenge-response procedure upon an attachment procedure of attaching the SIM 100 to a mobile communication network
Fig. 6 shows a SIM comprising an Open Firmware Loader ITL hosting secure channel credentials, according to embodiments of the invention.

According to the embodiments as depicted in Fig. 6, the Image Trust Loader ITL/ Open Firmware Loader OFL 350, 450 in the SIM 100 has integrated thereto secure channel credentials CRE to enable the download of the available destined firmware image or images 310, 410 from the firmware source 340, 440 directly to the SIM 100 ITL/OFL 350, 440. The secure channel credentials ensure secured, for example encrypted and/or authenticated, transmission of the firmware images 310, 410 from the firmware source 340, 440 to the SIM 100 ITL/OFL 350, 440.

In all above described and further embodiments, the firmware image 310, 410 may be sent from the firmware source 340, 440 to the SIM 100 ITL/OFL 350, 450 in an encrypted form.

### Explanation of reference numerals

- 100: SIM
- X10: firmware image / OS image
- X20: OEM Software Update Module
- X30: Device OS Update Agent
- X40: Firmware provider firmware source
- X50: SIM Image Trust Loader ITL / Open Firmware Loader OFL

### Explanation of reference numerals referring to invention. Fig. 3, 4, 5, 6

- 1a: push notification
- 1c: forwarded push notification
- 1b: pull notification
- 1b*: pull notification
- 2: firmware image download
- 3: firmware image commitment, including installation and activation of firmware image, as required with in advance policy check and/or authentication steps

### Cited documents

[1] [GP OFL] GlobalPlatform Technology, Open Firmware Loader for Tamper Resistant Secure Hardware, Version 2.0, Public Release, January 2022, Document Reference: GPC_SPE_134 (formerly GPC_FST_134)
[2] EP2533485B1
[3] EP2294846B1

## Claims

1. A Subscriber Identity Module, SIM (100), comprising, implemented in the SIM (100):
- an Open Firmware Loader (OFL; ITL) constructed to manage downloadable or downloaded firmware images (310, 410) received in the SIM (100) from a firmware source (340, 440); **characterized by** the Open Firmware Loader (OFL; ITL) having integrated thereto an Ultralight-Bootstrap, ULB, configuration, enabling the Open Firmware Loader (OFL; ITL) to receive firmware images (310, 410), downloaded (2) from the firmware source (340, 440) to the SIM (100), under the Ultralight-Bootstrap, ULB, protocol, in messages of a challenge-response procedure upon an attachment procedure of attaching the SIM (100) to a mobile communication network.

2. A method for downloading a firmware image to a SIM (100), the SIM (100) comprising, implemented in the SIM (100): - an Open Firmware Loader (OFL; ITL) constructed to manage downloaded firmware images (310, 410) received in the SIM (100) from a firmware source (340, 440); **characterized by** the Open Firmware Loader (OFL; ITL) having integrated thereto an Ultralight-Bootstrap, ULB, configuration, the Open Firmware Loader (OFL; ITL) receiving the firmware image (310, 410), downloaded (2) from the firmware source (340, 440) to the SIM (100) under the Ultralight-Bootstrap, ULB, protocol, in messages of a challenge-response procedure upon an attachment procedure of attaching the SIM (100) to a mobile communication network.

3. The method according to claim 2, wherein the firmware image (310, 410) comprises an operating system, OS, and the method further comprises, after receiving the firmware image (310, 410), one or several or all of the steps by the Open Firmware Loader (OFL; ITL) (3):
- install the operating system, OS, in the SIM (100);
- optionally activate the installed operating system;
- handover of control from the Open Firmware Loader (ITL) to the installed operating system, OS.

4. The method according to claim 2 or 3, wherein the method further comprises, after installing the operating system, OS, in the SIM (100) and before handover of control from the Open Firmware Loader (ITL) to the installed operating system, OS: reset the SIM (100).

5. The method according to any of claims 2 to 4, wherein the SIM (100) comprises a current operating system being installed in the SIM (100), and wherein the firmware image (310, 410) comprises a new operating system, OS, or an updated version of said current operating system, OS, and wherein the method further comprises, after receiving the firmware image (310, 410), installing the new operating system, OS, or installing the updated version of the current operating system, OS, in the SIM (100), and optionally deleting the current operating system, OS, from the SIM (100).

6. The method according to any of claims 2 to 6, further comprising:
- initiate a verification (1a, 1b, 1c) if any firmware images destined for the SIM (100) are available at the firmware source (340, 440) for download to the SIM (100), and
- if this is the case, perform the download (2) of the firmware image (310, 410).

7. The method according to claim 6, wherein initiate the verification comprises:
- send a push notification (1a, 1c) from the firmware source (340, 440) to the SIM (100) that a firmware image (310, 410) destined for the SIM (100) is available at the firmware source (340, 440) for download to the SIM (100).

8. The method according to claim 7, wherein the push notification is sent from the firmware source (340, 440) to an OS Update Agent (330, 340) implemented in a device hosting the SIM (100), and sent further from the OS Update Agent (330, 340) to the SIM.

9. The method according to claim 6, wherein initiate the verification comprises:
- retrieve (1b; 1b*), by the Open Firmware Loader (OFL; ITL) of the SIM (100) or by an OS Update Agent (330, 340) implemented in a device hosting the SIM (100) or by a different source (320, 420), a pull notification from the firmware source (340, 440) that a firmware image (310, 410) destined for the SIM (100) is available at the firmware source (340, 440) for download to the SIM (100).

10. The method according to claim 9, wherein initiate the verification comprises:
- retrieve (1b; 1b*), by the Open Firmware Loader (ITL) of the SIM (100), directly from the firmware source (340, 440), said pull notification from the firmware source (340, 440) that a firmware image (310, 410) destined for the SIM (100) is available at the firmware source (340, 440) for download to the SIM (100).

11. A Subscriber Identity Module, SIM (100), comprising, implemented in the SIM (100):
- an Open Firmware Loader (OFL; ITL) constructed to manage downloadable or downloaded firmware images (310, 410) received in the SIM (100) from a firmware source (340, 440); **characterized by** the Open Firmware Loader (OFL; ITL) having integrated thereto secure channel credentials (CRE), enabling the Open Firmware Loader (OFL; ITL) to receive firmware images (310, 410), downloaded (2) from the firmware source (340, 440) to the SIM (100), using the secure channel credentials (CRE).

12. A method for downloading a firmware image to a Subscriber Identity Module, SIM (100), the SIM (100) comprising, implemented in the SIM (100): - an Open Firmware Loader (OFL; ITL) constructed to manage downloaded firmware images (310, 410) received in the SIM (100) from a firmware source (340, 440); **characterized by** the Open Firmware Loader (OFL; ITL) having integrated thereto secure channel credentials (CRE), the Open Firmware Loader (OFL; ITL) receiving the firmware image (310, 410), downloaded (2) from the firmware source (340, 440) to the SIM (100), using the secure channel credentials (CRE).

13. The method according to claim 12 in combination with any of claims 3 to 10.
